(19) Europäisches Patentamt / European Patent Office / Office européen des brevets

(11) **EP 4 160 203 A1**

(12) **EUROPEAN PATENT APPLICATION**
published in accordance with Art. 153(4) EPC

(43) Date of publication:
**05.04.2023 Bulletin 2023/14**

(21) Application number: **21821637.2**

(22) Date of filing: **29.03.2021**

(51) International Patent Classification (IPC):
**G01N 30/02** (2006.01)   **G01N 30/80** (2006.01)
**G01F 1/708** (2006.01)   **G01F 1/64** (2006.01)

(86) International application number:
**PCT/CN2021/083669**

(87) International publication number:
**WO 2021/248985 (16.12.2021 Gazette 2021/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.06.2020 CN 202010533076**

(71) Applicants:
• **Thermo Fisher Scientific (Shanghai) Instruments Co., Ltd.**
**Shanghai 201206 (CN)**
• **Thermo Fisher Scientific (Suzhou) Instruments Co., Ltd.**
**Suzhou, Jiangsu 215129 (CN)**

(72) Inventors:
• **WANG, Hongfang**
**Shanghai 201206 (CN)**
• **LI, Gang**
**Shanghai 201206 (CN)**
• **FAN, Kun**
**Shanghai 201206 (CN)**
• **GONG, Chao**
**Shanghai 201206 (CN)**

(74) Representative: **Stellbrink & Partner Patentanwälte mbB**
**Widenmayerstrasse 10**
**80538 München (DE)**

(54) **METHOD FOR DETERMINING LIQUID FLOW RATE, FRACTION COLLECTOR AND LIQUID CHROMATOGRAPHY SYSTEM**

(57) A method for determining a liquid flow rate in a liquid chromatography system. The liquid chromatography system sequentially comprises a fraction valve (210), a first sensor (220) and a second sensor (230) in a flow direction, a pipeline between the first sensor (220) and the second sensor (230) having a known volume of the pipeline between the sensors. The method comprises: step A: emptying a pipeline between a liquid discharge port of a fraction valve (210) and a first sensor (220); step B: guiding a liquid flow from the liquid discharge port of the fraction valve (210) to a pipeline at a position where the first sensor (220) and a second sensor (230) are located; and step C: determining the flow rate of the liquid flow on the basis of a time difference between a first moment when the first sensor (220) detects a liquid-gas interface where the liquid flow interfaces with a gas and a second moment when the second sensor (230) detects the liquid-gas interface, and the volume of the pipeline between the sensors. Further provided is a fraction collector. The accuracy of flow rate measurement and the efficiency of fraction collection can be greatly improved by the liquid-gas interfaces provided by the liquid flow passing through the emptied liquid discharge pipeline.

Fig. 3

EP 4 160 203 A1

## Description

### Technical Field

The present invention generally relates to the field of liquid chromatography. Specifically, the present invention relates to a method for determining the flow rate of a liquid flow in a liquid chromatography system, and also relates to a fraction collector and a liquid chromatography system comprising the fraction collector.

### Background Art

High-performance liquid chromatography (HPLC) is an efficient and fast analytical separation technology developed rapidly in the 1970s, and is an important means for modem separation and testing. The separation principle of chromatography is as follows: when components dissolved in a mobile phase pass through a stationary phase, their retention time in the stationary phase is different due to their interactions (adsorption, distribution, exclusion and affinity) with the stationary phase in different magnitudes and strengths, and thereby they flow out of the stationary phase one after the other.

Liquid chromatographs manufactured on the basis of the above-mentioned high-performance liquid chromatography can be further classified into liquid-liquid chromatography (LLC) and liquid-solid chromatography (LSC) according to whether the stationary phase is liquid or solid. Modern liquid chromatographs may, for example, comprise high-pressure infusion pumps, sample injection systems, temperature control systems, chromatographic columns, detectors, signal recording systems, and other parts.

A fraction collector is a common auxiliary device of a liquid chromatography system, and is mainly used in pharmaceutical, food safety, scientific research and other fields. The fraction collector is mainly used to collect various target compounds separated by liquid chromatography. For example, when a standard pure sample needs to be provided or a certain component needs to be further identified, a fraction collector is often used to collect a desired component at the outlet of a chromatographic column, and the mobile phase in the fraction is removed to obtain a pure component. The fraction collector can perform cutting in a manually or automatically controlled manner according to elution signals of chromatographic peaks. The current trend of development is to automate sample injection and fraction collection, which may perform continuous operations and repeated separations.

The basic working principle of the fraction collector is as follows: after a liquid flow (for example, a target compound in a liquid phase) is separated by liquid chromatography, it enters the fraction collector in chronological order. The fraction collector switches a fraction valve according to the arrival time of the target compound, and collects a compound to be collected in a corresponding container. In addition, a valve can be selected to switch the flow path to waste liquid during a gap between collections of two fractions, thereby introducing an unwanted solvent or a mobile phase to the waste liquid.

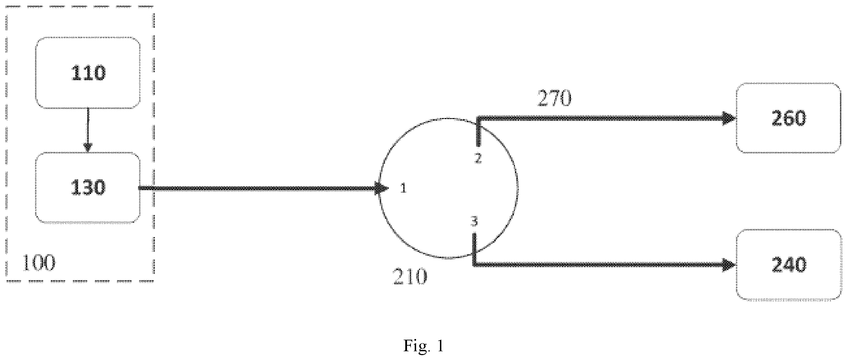

Generally, a fraction collector comprises a fraction valve, a collection needle, various pipelines or flow paths (as shown in Fig. 1) to meet various demands of fraction collection.

The main issue with most existing fraction collectors is that there is no flow velocity measurement function, so the pump flow speed or flow rate (also referred to as system flow velocity or flow rate) of the liquid chromatography system can only be indirectly used as the flow velocity or flow rate. However, the system flow velocity or flow rate is usually inaccurate, which can result in the time error of fraction collection, thereby leading to recovery and cross-contamination issues.

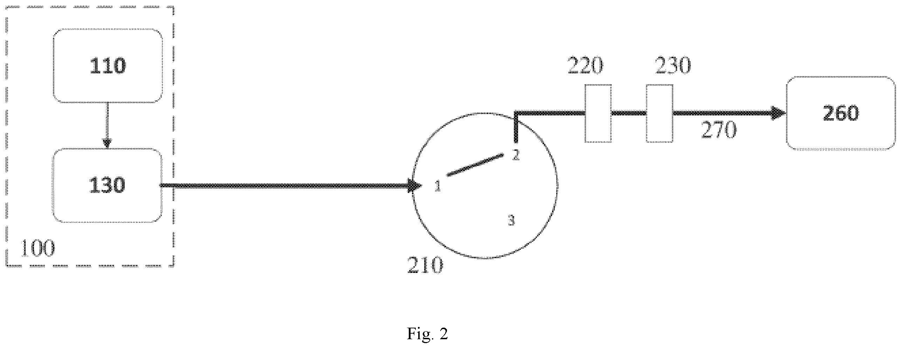

At present, the fraction collector with the flow velocity measurement function mainly comprises the following method: as shown in Fig. 2, a liquid chromatograph arranged before a fraction collector along a flow path direction is used to inject a specific substance. This substance can be detected by two sensors arranged on a waste liquid pipeline of the fraction collector. The flow velocity is calculated using the difference between the times when the two sensors detect the substance successively and the volume of a pipeline between the two sensors at fixed positions.

However, this method requires a separate substance insertion device (e.g., an automatic sampler) in the liquid chromatograph.

Therefore, there is always a need to be able to accurately determine the flow rate of a liquid flow in a liquid chromatography system so as to improve the accuracy of the fraction collection time point.

Besides, there may be some other issues in the fraction collector in the prior art. For example, the needle washing method of the fraction collector is not flexible, and only needle washing liquid can be used for needle washing. For another example, since the fraction valve usually uses a solenoid valve, its internal structure may cause the liquid vortex effect, thereby causing issues such as fraction residues.

Therefore, for the fraction collector, there is always a need to flexibly provide various functions, reduce residues, and improve the recovery rate. At the same time, it is also expected that the flow path of the fraction collector itself is simple in design and low in cost.

## Summary of the Invention

The present invention provides a new method of determining the flow rate of a liquid flow and a new fraction collector, wherein the above-mentioned existing method of inserting a detectable substance in the liquid flow is not used to measure the flow rate, but a liquid flow flowing through an emptied liquid discharge pipeline is used to provide a liquid-gas interface so as to determine the flow rate of the liquid rate, so that the accuracy of flow rate measurement and thus the efficiency of fraction collection are greatly improved, and at the same time, the involved flow path structure and control method are very simple.

According to an aspect of the present invention, there is provided a method for determining the flow rate of a liquid flow in a liquid chromatography system. The liquid chromatography system sequentially comprises a fraction valve, a first sensor and a second sensor along a flow path direction, and the fraction valve comprises a liquid inlet, a liquid discharge port and a gas inlet, wherein a pipeline between the first sensor and the second sensor has a known inter-sensor pipeline volume. The method comprises: step A: emptying a pipeline between a liquid discharge port of the fraction valve and the first sensor; step B: guiding a liquid flow from the liquid discharge port of the fraction valve to pipelines at positions where the first sensor and the second sensor are located; and step C: determining the flow rate of the liquid flow on the basis of a time difference between a first moment when the first sensor detects a liquid-gas interface where the liquid flow interfaces with a gas and a second moment when the second sensor detects the liquid-gas interface, and the inter-sensor pipeline volume.

According to another aspect of the present invention, there is provided a fraction collector. The fraction collector comprises: a fraction valve comprising a liquid inlet, a liquid discharge port and a gas inlet; a first sensor arranged behind the liquid discharge port of the fraction valve along a flow path direction; a second sensor arranged behind the first sensor along the flow path direction, wherein a pipeline between the first sensor and the second sensor has a known inter-sensor pipeline volume; and a controller configured to control the position of the fraction valve, wherein when the fraction valve is at a first position, the gas inlet is in fluid communication with the liquid discharge port, so that a gas can be introduced into the fraction valve from the inlet port of the fraction valve and guided through the liquid discharge port of the fraction valve to pipelines at positions where the first sensor and the second sensor are located; when the fraction valve is at a second position, the liquid inlet is in fluid communication with the liquid discharge port, so that a liquid flow can flow from the liquid inlet into the fraction valve and flow through the liquid discharge port to the pipelines at the positions where the first sensor and the second sensor are located; and the controller can determine the flow rate of the liquid flow on the basis of a time difference between a first moment when the first sensor detects a liquid-gas interface where the liquid flow interfaces with the gas and a second moment when the second sensor detects the liquid-gas interface, and the inter-sensor pipeline volume.

## Brief Description of the Drawings

Other features and advantages of the present invention will become apparent from the following detailed description with reference to the accompanying drawings, wherein:

Fig. 1 schematically shows members and flow paths in a liquid chromatography system according to the prior art, wherein a fraction valve is shown as a three-port valve;

Fig. 2 schematically shows members and flow paths in a liquid chromatography system according to the prior art, wherein the flow rate of a liquid flow is calculated by a method of the prior art;

Fig. 3 schematically shows members and flow paths in a liquid chromatography system according to the present invention, wherein the flow paths in steps of determining the flow rate of a liquid flow by a method of the present invention are shown;

Fig. 4 schematically shows a flow path design for realizing needle washing of the fraction collector according to the present invention; and

Fig. 5 schematically shows another flow path design for realizing needle washing of a fraction collector according to the present invention.

It should be noted that the accompanying drawings referred to are not all drawn to scale, but rather are exaggerated to illustrate various aspects of the present invention. Moreover, in this regard, the accompanying drawings should not be construed as limiting.

List of reference signs:

100 liquid chromatograph;
110 first pump;
130 liquid chromatography detector;
210 fraction valve;
220 first sensor;
230 second sensor;
240 collection needle;
250 flush pump;
260 waste liquid collector;
270 liquid discharge pipeline;
280 switching valve;
290 second pump;
1 first port of fraction valve;
2 second port of fraction valve;
3 third port of fraction valve;
4 fourth port of fraction valve;
5 fifth port of fraction valve;
6 sixth port of fraction valve;
p1 first port of switching valve;
p2 first port of switching valve; and
p3 third port of switching valve.

## Detailed Description of the Preferred Embodiments

The liquid chromatography system described in the present invention refers to a system for separation and analysis based on the separation principle of chromatography (comprising traditional and modern high-performance liquid chromatography), especially a highly integrated automatic control system. In the present invention, a liquid chromatograph included in the liquid chromatography system may be various types of liquid chromatographs, and a fraction collector included in the liquid chromatography system may comprise various conventional types of fraction valves. Although the liquid chromatography system of the present invention is particularly suitable for applications such as pharmacy, food safety, laboratory scientific research, etc., it is not limited thereto.

In the present invention, various members or devices of the liquid chromatography system can be in fluid communication with each other (especially in the form of selective communication). For example, various members or devices may be fluidly connected by means of pipelines, but not limited to conventional forms of pipelines, and they may be fluidly connected by means of any connection structure having a certain volume. In other words, the term "pipeline" within the meaning of the present invention can also be interpreted more broadly, i.e. any fluid connection structure having a certain volume. In addition, hereinafter, when an "inlet", "outlet", "port" or "opening" of a member or device is involved, generally, because the port itself contains a very small volume, the volume will not be calculated within the volume of a pipeline.

In the present invention, a liquid flow will flow in a flow path of the liquid chromatography system. However, due to the physical flow of the fluid and possible variations in ambient temperature or pressure along the flow path, there may be slight variations in the actual flow rate of the fluid between points in the liquid chromatography system of the present invention. Here, the term "flow rate" of the liquid flow may refer to a volumetric flow rate. In addition, if the cross-section between various pipelines in the liquid chromatography system is constant, it can also be considered that the flow rate of the liquid flow in the liquid chromatography system is kept substantially constant.

In the present invention, the liquid flow flowing in the flow path of the liquid chromatography system may comprise substances to be separated, which are separated from each other (e.g., separated into various target compounds) after passing through a liquid chromatograph, and then are collected as fractions by a fraction collector according to needs.

Advantageously, various detectors or sensors of different modules or devices in the liquid chromatography system of the present invention can communicate with each other, thereby facilitating automatic control by the controller to calculate the required pipe volume or other required information.

In the present invention, serial numbers such as "first" and "second" do not necessarily refer to the order in time, but are only used to distinguish a variety of different components (e.g., sensors, ports, signals, etc.) or events with their importance not ranked.

In the accompanying drawings of the present invention, ports (e.g., first to sixth ports) of a fraction valve are directly represented by numbers, but it is not excluded that other names (e.g., a liquid inlet, a gas inlet, etc.) are used hereinafter to describe one or more of these ports. In addition, in the accompanying drawings, ports (e.g., first to third ports) of other valves of a fraction collector are also directly represented by numerals.

In the present invention, a term "flow path direction" mainly refers to a flowing direction of liquid flow or other fluids in the pipeline. Furthermore, a term "before" means a member or device that is located (relatively) upstream when viewing along the flow path direction in the liquid chromatography system, and a term "behind" means a member or device that is located (relatively) downstream when viewing along the flow path direction in the liquid chromatography system.

In addition, in the present invention, terms "sensor" and "detector" are each a device or member that can detect a marker, but it is not excluded that there are other functional or structural differences between the two.

Furthermore, in the present invention, "sensor" and "detector" themselves are not fluid members, but the simplified expression of a pipeline between them and other fluid members or the volume of the pipeline herein refers to a pipeline between a pipeline site where the "sensor" and "detector" are located and other fluid members or the volume of the pipeline, or a physical pipeline calculated from such a site where a liquid flow or other fluid in the pipeline is detected by the "sensor" and "detector" to a corresponding pipeline site of other fluid members or the volume of the pipeline.

Fig. 2 shows a general layout of a liquid chromatography system according to an embodiment of the present invention. First of all, the liquid chromatography system may comprise a liquid chromatograph 100. The liquid chromatograph 100 may be associated or integrated with liquid conveying equipment not shown in the figure. The liquid conveying leader device to may be used to convey various substances (e.g., samples, solvents, etc.) in a storage container to the liquid chromatograph 100. Furthermore, the liquid conveying equipment may or may not include a mixing device for mixing a plurality of substances before entering the liquid chromatograph 100.

The liquid chromatograph 100 generally comprises a column manager (not shown in the figure), and the column manager generally provides one or more chromatographic separation columns used to separate target compounds (e.g., sample-solvent compositions) with a controlled temperature environment. Each separation column is adapted to separate various components (or analytes) of a sample from each other as a liquid flow passes through it, and to elute the analytes (still carried by the liquid flow) from the column at different times.

Subsequently, the separated components travel from the column manager to a liquid chromatography detector 130 such as an ultraviolet-visible light detector (with a model of VWD or DAD, for example) of the liquid chromatograph 100 to analyze various components.

The liquid chromatograph 100 is in fluid communication with an inlet (also referred to as a "liquid inlet") of a fraction valve 210 of a fraction collector, which will be described in detail below, to recover the target compounds resulting from the separation. Generally, a pipeline between the liquid chromatography detector 130 and the inlet of the fraction valve 210 has a fixed pipeline volume.

In the present invention, a moment when a liquid-gas interface where the liquid flow interface with a gas "arrives" at the liquid chromatography detector or other sensors (e.g., first and second sensors described in detail below) can be recorded, and preferably sent to a controller in the form of a specific signal. Since the liquid-gas interface is detected by the sensor or detector, the recorded moment is theoretically accurate.

In addition, the liquid chromatograph 100 of the present invention may further comprise a first pump 110 for pumping the liquid flow, so that the liquid flow can flow through the liquid chromatography detector 130, the fraction valve 210 and subsequent members at an approximately constant flow rate in the liquid chromatography system (when the pressure drop in the system flow path is relatively small).

When viewed along the flow path direction, the liquid chromatography system may comprise a fraction collector arranged behind the aforementioned liquid chromatograph 100. The fraction collector may switch its fraction valve 210 according to the time of arrival of the liquid flow (e.g., various desired target compounds) from the liquid chromatograph 100, so that fractions to be collected are collected in corresponding containers.

For this reason, the fraction collector of the present invention comprises a fraction valve 210. The fraction valve 210 is generally configured as a multi-port valve, and the fraction valve 210 may comprise a plurality of ports. According to a corresponding switching strategy of the fraction valve 210, one of these ports may be used as an inlet (e.g., a liquid inlet, a gas inlet or the like) of the fraction valve 210, and thus, the liquid flow from the liquid chromatograph 100 can flow into the fraction valve through the liquid inlet, and another one or others of these ports may be used as an outlet (e.g., a liquid discharge port) of the fraction valve 210 for fluid communication with subsequent pipelines and members.

In addition, other ports of the fraction valve 210 may also be connected to a collection needle 240 (a kit), or may also be connected to other valves or pumps (various integrated functions of the fraction valve 210 will be described in further detail below).

When viewed along the flow path direction, the liquid chromatography system may comprise a first sensor 220 arranged behind the fraction valve 210. Preferably, the first sensor 220 is provided on a flow path of the fraction collector leading to a waste liquid collector 260. It can be understood that a pipeline with a known volume is included between the first sensor 220 and the fraction valve 210.

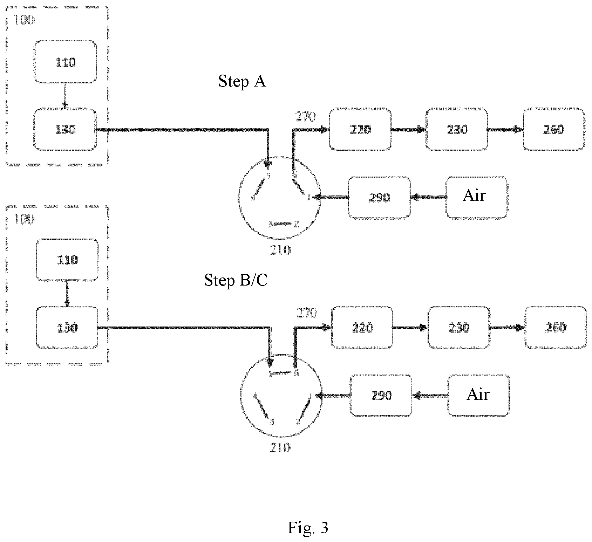

In addition, in the present invention, the liquid chromatography system may further comprise a second sensor 230. Preferably, when viewed along the flow path direction, the second sensor 230 is arranged behind the first sensor 220. However, the order of the first sensor and the second sensor is not limited to this, and the second sensor may also be located before the first sensor 220 (when viewed along the flow path direction). However, the second sensor 230 and the first sensor 220 should correspond to the same flow path, e.g., the flow path leading to the waste liquid collector 260, as shown in Fig. 3 in an exemplary manner.

In the present invention, the first sensor 220 and the second sensor 230 may be any type of sensor capable of detecting the detectable liquid-gas interface in the liquid flow, including but not limited to a UV sensor or a refractive index sensor. Optionally, the first sensor 220 and the second sensor 230 may emit electrical signals upon the detection of arrival of the liquid-gas interface. For example, a first signal may be generated when the detectable liquid-gas interface passes through the first sensor 220, and a second signal may be generated when it passes through the second sensor 230. These electrical signals may then be sent to a controller of the liquid chromatography system, which will be described in detail below, to facilitate the determination of the volume of the pipeline.

However, it can be understood that when the sensor or detector detects the liquid-gas interface, it may not emit a special electrical signal, but a corresponding moment (e.g., a first moment at which the first sensor 220 detects the liquid-gas interface, a second moment at which the second sensor detects the liquid-gas interface, etc.) at which the sensor or detector detects the liquid-gas interface is determined by the change of the electrical signal during its monitoring.

In addition, it can be understood that the pipeline between the first sensor 220 and the second sensor 230 also generally comprises a known volume. The volume may be referred to as an inter-sensor pipeline volume.

As described previously, although the first sensor 220 and the second sensor 230 are shown in the pipeline in Fig. 3, in practice, it is only indicated that the first sensor 220 and the second sensor 230 are at the position so that they can detect the liquid-gas interface flowing through this position, and do not physically exist on the flow path. For example, the first sensor 220 and the second sensor 230 may be positioned so that they can detect the liquid-gas interface passing through the pipeline without hindrance. In other words, Fig. 3 is only a schematic view, does not represent that the first sensor 220 and the second sensor 230 are located within the pipeline, but rather shows the approximate positioning of the first sensor 220 and the second sensor 230 along the flow path.

In order to enable switching to collect different fractions or to discharge waste liquid, the fraction valve 210 is advantageously configured as a switchable multi-port valve. A traditional three-port valve is shown in Fig. 1, but a four-port valve design also exists in the prior art. In an embodiment of the present invention shown in Fig. 3, the multi-port valve is configured as a six-port valve, but it is not necessary. For example, a traditional three-port valve or four-port valve can also achieve the objective of the present invention. More specifically, for the present invention, such a multi-port valve should have at least one port (a liquid inlet) that can be in fluid communication with an outlet (of a pipeline) of the liquid chromatograph 100, another port (a liquid discharge port) that can be in communication with a flow path where the first sensor 220 and the second sensor 230 are located, and yet another port (a gas inlet) used for a gas in an emptied pipeline to enter the fraction valve.

As shown in Fig. 3 in an exemplary manner, a fifth port 5 (the liquid inlet) of the fraction valve 210 may selectively be in fluid communication with the outlet (of the pipeline) of the liquid chromatograph 100, and a sixth port 6 (the liquid discharge port) of the fraction valve 210 may selectively be in fluid communication with pipelines at positions where the first sensor 220 and the second sensor 230 are located.

The fraction collector comprises a controller (not shown in the figure). On the one hand, the controller is used to switch whether the ports of the fraction valve 210 are in communication or not, and on the other hand, it is used to accurately determine the flow rate of the liquid flow.

For example, in this embodiment, when the controller of the fraction collector switches the fraction valve 210 to a first position where its first port 1 (the gas inlet) and sixth port 6 (the liquid discharge port) are in communication, a gas may be introduced into the fraction valve 210 from the gas inlet of the fraction valve 210 and guided through the liquid discharge port of the fraction valve 210 to the pipelines at the positions where the first sensor 220 and the second sensor 230 are located.

When the controller of the fraction collector switches the fraction valve 210 to a second position where its fifth port 5 and sixth port 6 are in communication, the liquid flow can flow from the outlet of the liquid chromatograph 100 into the fraction valve 210 through the pipeline, and then flows through the outlet (here, the sixth port 6 or the liquid discharge port) of the fraction valve 210 to the pipeline where the first sensor 220 is located. It can be understood that the internal volume of the fraction valve 210 between the fifth port where the liquid flow flows in and the sixth port (the liquid discharge port) where the liquid flow flows out is generally known.

As shown in Figs. 3 to 5, the fraction valve 210 may also comprise a first port to a fourth port to achieve various functions. For example, when the fraction valve 210 needs to collect a fraction, the fraction valve 210 may be switched to a collection position where the fifth port 5 and the fourth port 4 of the fraction valve 210 can be in fluid communication. Thus, the fraction may flow into a designated container through the fifth port 5 and the fourth port 4 as well as the collection needle 240 located outside the fraction valve 210.

For another example, at the second position, in addition to being used to determine the flow rate of the liquid flow, the liquid flow from the liquid chromatograph 100 may also be discharged to the waste liquid collector 260 through the fifth port 5 (the liquid inlet) and the sixth port 6 (the liquid discharge port).

Also, for example, a third port 3 of the fraction valve 210 may be connected to an external flush pump 250 or other pumps to flush the collection needle (the kit) (this function will be further described in detail below).

However, as can be understood, although it is shown in the embodiment in Fig. 3 that the first port 1 (the gas inlet) and the sixth port 6 (the liquid discharge port) are in fluid communication at the first position (see step A of Fig. 3) of the fraction valve, and the fifth port 5 (the liquid inlet) and the sixth port 6 (the liquid discharge port) are in fluid communication at the second position of the fraction valve 210 (see step B of Fig. 3), the communication between other ports except the first port and the sixth port at the first position is only exemplary and optional, and not necessarily set in this way. However, it should still be ensured that the remaining ports are not in fluid communication with the first port 1 and the sixth port 6 at the first position of the fraction valve 210, so as not to affect the realization of the predetermined flow path. Similarly, at the second position, the communication between other ports except the fifth port 5 and the sixth port 6 is only exemplary and optional, and not necessarily set in this way. However, it should still be ensured that the remaining ports are not in fluid communication with the fifth port 5 and the sixth port 6 at the second position of the fraction valve 210, so as not to affect the realization of the predetermined flow path.

In order to determine the flow rate of a liquid flow in a liquid chromatography system, a method of the present invention comprises: first, emptying a pipeline between a liquid discharge port (e.g., a sixth port 6 shown in Fig. 3) of a fraction valve 210 and a first sensor.

Here, the term "emptying" refers to discharging a liquid flow or other mobile phase substances in the pipeline between the liquid discharge port of the fraction valve 210 and the first sensor 220, so that there is no liquid flow in this pipeline. Preferably, a pipeline between the liquid discharge port of the fraction valve 210 and a second sensor 230 (if the second sensor 230 is located behind the first sensor 220 along a flow path direction) may be emptied. More preferably, the entire pipeline from the liquid discharge port of the fraction valve 210 to a waste collector 260 can be emptied.

The emptying step may be carried out by introducing a gas, especially air, into the pipeline between the liquid discharge port of the fraction valve 210 and the first sensor 220, preferably the pipeline between the liquid discharge port of the fraction valve 210 and the second sensor 230, and more preferably, the entire pipeline from the liquid discharge port of the fraction valve 210 to the waste liquid collector 260.

In some embodiments, the gas for emptying may be generated by placing the fraction valve 210 in the aforementioned first position where the gas inlet of the fraction valve 210 is in fluid communication with the liquid discharge port. Thus, the gas may be introduced into the fraction valve 210 from the gas inlet of the fraction valve 210 and then guided through the liquid discharge port of the fraction valve 210 to at least a pipeline at a position where the first sensor 220 is located, preferably to a pipeline at a position where the second sensor 230 is located, and more preferably the entire pipeline leading to the waste liquid collector 260. The advantage of emptying the entire liquid discharge pipeline 270 is that it may avoid a certain back pressure that may exist during the subsequent liquid flow flowing through the first sensor 220 and the second sensor 230 due to some liquid still remaining between the first sensor 220 and the end of the liquid discharge pipeline 270.

Advantageously, the fraction collector comprises a second pump 290, the second pump 290 may be connected to the aforementioned first port 1 (the gas inlet) of the fraction valve 210, and a gas is pumped to the fraction valve 210 by means of the second pump 290, as clearly shown in Fig. 3. It is particularly advantageous to directly use the second pump 290 to send the air into the fraction valve 210, and to guide it to the pipeline leading to the waste liquid collector 260 (at least the pipeline at the position where the first sensor 220 is located) through the sixth port 6 (the liquid discharge port) of the fraction valve 210.

After the emptying step, the method of the present invention further comprises guiding a liquid flow from the liquid discharge port of the fraction valve 210 to pipelines at positions where the first sensor 220 and the second sensor 230 are located. Since the pipeline from the liquid discharge port of the fraction valve 210 to the first sensor 220 has been emptied in the emptying step, when the liquid flow flows from the liquid discharge port of the fraction valve 210 to the pipelines at the positions where the first sensor 220 and the second sensor 230 are located, a liquid-gas interface where the liquid flow interfaces with the gas will sequentially pass through the positions where the first sensor 220 and the second sensor 230 are located.

It can be understood that the liquid inlet (the fifth port 5 in Fig. 3) of the fraction valve 210 is in fluid communication with the liquid discharge port (the sixth port 6) at the aforementioned second position of the fraction valve 210. Thus, the liquid flow can flow from the liquid inlet into the fraction valve 210 and flow out through the liquid discharge port.

However, this flow path design is preferred. Alternatively, it is also possible to introduce the liquid flow from the outside through other ports of the fraction valve 210 (e.g., other ports not connected to the liquid chromatograph) or to retain a part of the liquid flow in the fraction valve 210.

Preferably, the liquid flow from the liquid chromatograph 100 is introduced into the fraction valve 210 through the liquid inlet of the fraction valve 210, and then introduced into the liquid discharge pipeline 270, but the liquid flow may also come from other fluid members in the liquid chromatography system except the liquid chromatograph.

In addition to the aforementioned function for controlling the position of the fraction valve 210 (e.g., switching between the first position and the second position of the fraction valve 210), the controller of the fraction collector of the present invention is further configured so that it can determine the flow rate of the liquid flow on the basis of a time difference between a first moment when the first sensor 220 detects the liquid-gas interface where the liquid flow interfaces with the gas and a second moment when the second sensor 230 detects the liquid-gas interface, and the inter-sensor pipeline volume. For example, a volumetric flow rate (which is in unit of ml/min, for example) can be obtained by dividing the inter-sensor pipeline volume by the time difference.

Since the first sensor 220 and the second sensor 230 need to be used to detect the liquid-gas interface between the liquid flow and the gas in the present invention, in order to further improve the accuracy of the first moment when the first sensor 220 detects the liquid-gas interface and the second moment when the second sensor detects the liquid-gas interface, there may be an independent step of determining a voltage threshold before the aforementioned method step for determining the flow rate of the liquid flow in the present invention.

Specifically, optionally, before the foregoing method steps, the liquid flow may be caused to sequentially flow through the pipelines at the positions where the first and second sensors are located (for the realization of a specific liquid flow path, reference may be made to the foregoing or a different method may be used, and details thereof are not repeated here). In addition, before the foregoing method steps, a gas, preferably air, may be caused to sequentially pass through the pipelines at the positions where the first and second sensors are located (for the realization of a specific gas path, reference may be made to the foregoing or a different method may be used, and details thereof are not repeated here). The two steps may be carried out separately according to needs, and their order may be set according to needs. In other words, the liquid flow and then the gas may be caused to flow through the pipelines at the positions where the first and second sensors are located, but the order may also be reversed.

A voltage generated by the first sensor 220 when it detects the liquid flow is recorded as a high voltage of the first sensor 220, and a voltage generated by the first sensor 220 when it detects the gas is recorded as a low voltage of the first sensor 220. Then, according to the present invention, a voltage threshold of the first sensor 220 can be determined on the basis of the high voltage and the low voltage of the first sensor 220.

A voltage value generated by the second sensor when it detects the liquid flow is recorded as a high voltage of the second sensor, and a voltage value generated by the second sensor when it detects the gas is recorded as a low voltage of the second sensor. Then, according to the invention, a voltage threshold of the second sensor can be determined on the basis of the high voltage and the low voltage of the second sensor.

It can be understood that only one of the voltage threshold of the first sensor 220 and the voltage threshold of the second sensor may be determined. However, preferably, both are determined.

If the voltage threshold of the first sensor 220 is determined, in the aforementioned method for determining the flow rate of the liquid flow of the present invention, a moment when the voltage value of the first sensor 220 upon its detection of the liquid flow exceeds its voltage threshold is recorded as the first moment to reduce misrecording of time caused by gas or liquid fluctuations in the fluid pipeline, thereby improving the accuracy of flow rate determination of the liquid flow.

Similarly, if the voltage threshold of the second sensor is determined, in the aforementioned method for determining the flow rate of the liquid flow of the present invention, a moment when the voltage value of the second sensor upon its detection of the liquid flow exceeds its voltage threshold is recorded as the second moment to reduce misrecording of time caused by gas or liquid fluctuations in the fluid pipeline, thereby improving the accuracy of flow rate determination of the liquid flow.

In a specific embodiment, the voltage threshold of the first sensor 220 and/or the voltage threshold of the second sensor may be calculated by the following formula:

$$V_{threshold} = (V_{high\ voltage} - V_{low\ voltage}) * 60\% + V_{low\ voltage}.$$

The numerical value "60%" in the above formula may also be "40%", "50%" and "70%", etc., but it is preferably "60%". Here, the unit of voltage is generally volts.

In addition to the above-mentioned need to switch the fraction valve 210 when determining the flow rate of the liquid flow, the fraction valve 210 configured as a two-position six-port switching valve of the present invention may also realize additional functions.

For example, when a fraction needs to be collected, the controller may be switched to a collection position where the fourth port 4 and the fifth port 5 of the fraction valve 210 are in communication so that the fraction can flow from the liquid chromatograph 100 into the fraction valve 210 through the fifth port 5 and flow into a designated container through the fourth port 4 and the collection needle 240 connected to the fourth port 4, so as to complete the collection of the fraction.

For another example, when a waste liquid needs to be discharged, the controller may be switched to a liquid discharge position (i.e., the second position described above) where the liquid from the liquid chromatograph 100 can be transferred to the waste liquid collector 260 through the fifth port 5 and the sixth port 6 in communication therewith.

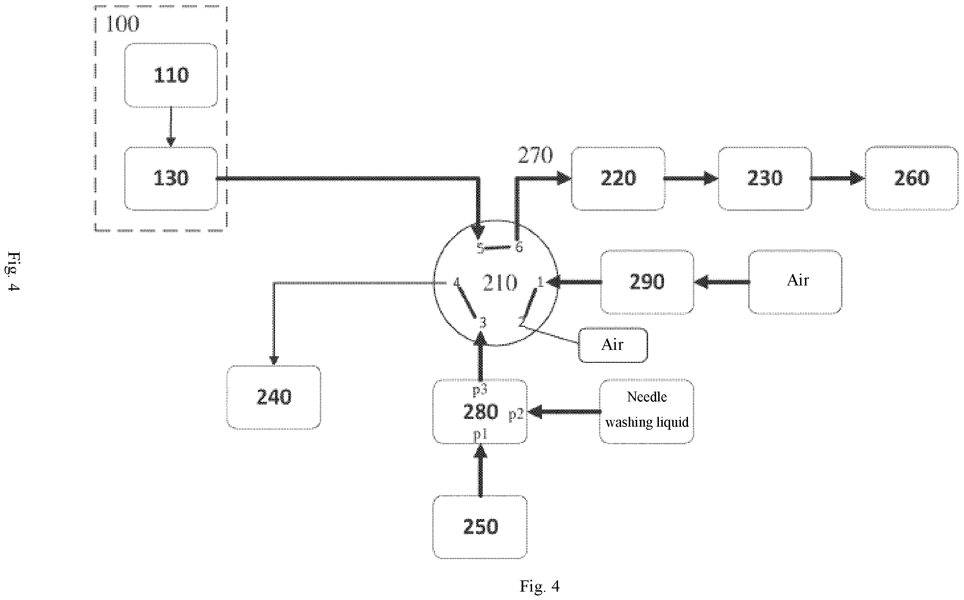

According to the present invention, a fraction collector may be used to flush the collection needle 240 (the kit). Specifically, the collection needle 240 (the kit) is connected to one port (the fourth port 4 as shown in Fig. 4) of the fraction valve 210.

In the present invention, a needle washing liquid or a gas (preferably, air) may be used for needle washing. To achieve needle washing, the fraction collector may comprise a flush pump 250 connected to the fraction valve 210. When the needle washing liquid is used for flushing, a predetermined volume of needle washing liquid is drawn into the flush pump 250 by the flush pump 250 and retained within the flush pump 250. When the air is used for flushing, a predetermined volume of air is drawn into the flush pump 250 by the flush pump 250 and retained within the flush pump 250. When the flush pump 250 includes the needle washing liquid or air for needle washing, the flush pump 250 may pump the needle washing liquid or air to the fraction valve 210, and then send the needle washing liquid or air through a port of the fraction valve 210 connected to the collection needle 240 (the kit) into the collection needle 240 for cleaning.

It can be understood that the needle washing liquid or air may be directly introduced into the flush pump 250 from the outside of the fraction valve 210, and then introduced into the fraction valve 210 through the flush pump 250. However, alternatively, the needle washing liquid or air may come directly from fraction valve 210 (e.g., the needle washing liquid or air introduced into fraction valve 210 through a port of the fraction valve 210 independent of the flush pump 250). In this case, the reason why the flush pump 250 still needs to be used is that the flush pump 250 may be used to measure the needle washing liquid or air, because the flush pump 250 can accurately draw a certain volume of needle washing liquid or air to better control the needle washing effect.

In an embodiment shown in Fig. 4, the flush pump 250 may not be directly connected to the fraction valve 210, and it may be connected to a port (the third port 3 shown in the figure) of the fraction valve 210 through a switching valve 280. The switching valve 280 has three ports, but it may also have more ports. One of the ports of the switching valve 280 is connected to a corresponding port of the fraction valve 210, another of the ports of the switching valve 280 is connected to the flush pump 250, and yet another of the ports of the switching valve 280 is connected to a needle washing liquid container or a pipeline providing the needle washing liquid. Therefore, the switching valve 280 can be used to be selectively in communication with the flush pump 250 or the needle washing liquid container or the pipeline providing the needle washing liquid. However, it can be understood that other fluid members capable of realizing flexible multi-channel communication except the switching valve may also be within the scope of the present invention.

In this embodiment, when the needle needs to be washed with the needle washing liquid, the first port p1 of the switching valve 280 is first in communication with its second port p2, so that the flush pump 250 can draw the needle washing liquid into it and retain therein. For example, the flush pump 250 (e.g., a plunger pump) can accurately draw a certain volume of needle washing liquid and retain it in a pump body. Then, the switching valve 280 can be switched to a position where its first port p1 is in communication with its third port p3, the third port p3 of the switching valve 280 is connected to the third port 3 of the fraction valve 210, and at this time, the third port 3 of the fraction valve 210 is also in communication with the fourth port 4, so that the needle washing liquid in the flush pump 250 can be pushed into the collection needle 240 for flushing.

In this embodiment, when the needle needs to be washed with the air, the first port p1 of the switching valve 280 is in communication with the third port p3, and the third port p3 of the switching valve 280 is in communication with the third port p3 of the fraction valve 210. At this time, one port (e.g., the second port 2 of the fraction valve 210 shown in Fig. 4) of the fraction valve 210 in communication with an external air source is in communication with the third port 3 of the fraction valve 210. For example, an external gas (e.g., an air source) may be pumped into the fraction valve 210 by means of the aforementioned second pump 290. Thus, the flush pump 250 can draw the air through the second port 2 and the third port 3 of the fraction valve 210. A flush pump 250 (e.g., a plunger pump) can accurately draw a certain volume of air and retain it in the pump body. Then, the fraction valve 210 is switched so that its third port 3 is only in communication with its fourth port 4, and thus the air (with a predetermined volume) retained in the flush pump 250 can be pushed into the collection needle 240 through the fraction valve 210 for flushing.

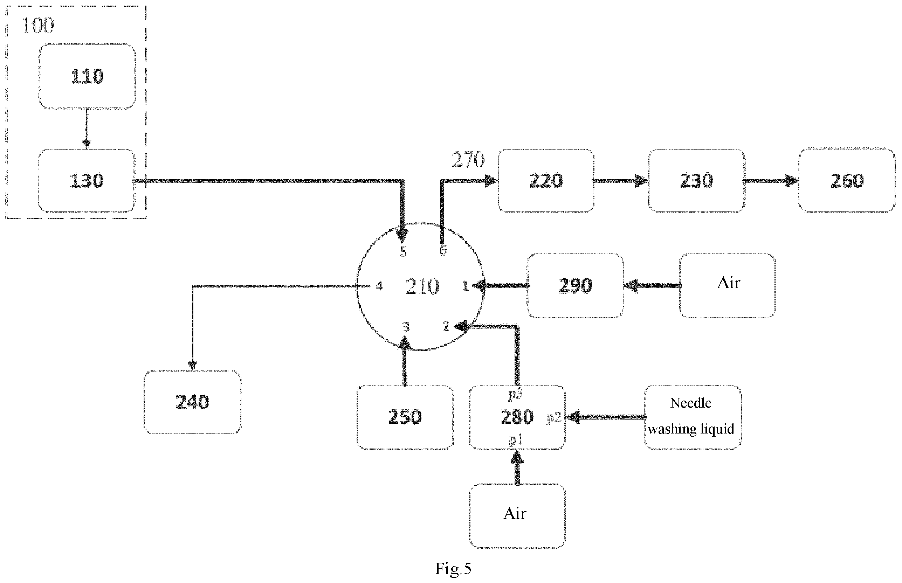

In another embodiment shown in Fig. 5, the flush pump 250 is directly connected to one port (e.g., the third port 3 of fraction valve 210 shown in Fig. 5) of the fraction valve 210. Another port (e.g., the second port 2 of the fraction valve 210 shown in Fig. 5) of the fraction valve 210 may be connected to a switching valve 280. The switching valve 280 has three ports, but it may also have more ports. One of the ports of the switching valve 280 is connected to a corresponding port (e.g., the aforementioned second port) of the fraction valve 210, another (e.g., the first port) of the ports of the switching valve 280 is connected to an external air source, and further another of the ports of the switching valve 280 is connected to a needle washing liquid container or a pipeline providing the needle washing liquid. Therefore, the switching valve 280 can be used to selectively supply the needle washing liquid or air to the fraction valve 210. For example, an external gas (e.g., an air source) may be pumped into the fraction valve 210 by means of the aforementioned second pump 290.

In this embodiment, when the needle needs to be washed with the needle washing liquid, the third port p3 of the switching valve 280 is first in communication with its second port p2, and at the same time, the third port 3 (the port connected to the flush pump 250) of the fraction valve 210 is also in communication with its second port (the port connected to the switching valve 280). Thus, the flush pump 250 (e.g., a plunger pump) can accurately draw a certain volume of needle washing liquid and retain it in the pump body. Then, the third port 3 of the fraction valve 210 is switched to be only in communication with the fourth port 4, so that the needle washing liquid in the flush pump 250 can be pushed into the collection needle 240 for flushing.

In this embodiment, when the needle needs to be washed with the air, the third port p3 of the switching valve 280 is first in communication with its first port p1, and at the same time, the third port 3 (the port connected to the flush pump 250) of the fraction valve 210 is also in communication with its second port (the port connected to the switching valve 280). Thus, the flush pump 250 (e.g., the plunger pump) can accurately draw a certain volume of air and retain it in the pump body. Then, the third port 3 of the fraction valve 210 is switched to be only in communication with its fourth port 4, so that the air in the flush pump 250 can be pushed into the collection needle 240 for flushing.

So far, the present invention has provided a fraction collector. The fraction collector comprises: a fraction valve 210 configured as a multi-port valve; a collection needle 240 configured to be connected to a fourth port of the multi-port valve; a flush pump 250 configured to be connected to a third port of the multi-port valve, wherein a needle washing liquid or air can be pumped into the multi-port valve by means of the flush pump 250, and wherein the fraction valve 210 comprises a needle washing position where the third port is in fluid communication with the fourth port, so that the needle washing liquid or air is pumped to the collection needle 240 through the multi-port valve to clean the collection needle 240.

Preferably, the needle washing liquid or air can be quantitatively pumped to the collection needle 240 by means of the flush pump 250.

The flush pump 250 may be directly connected to the third port of the multi-port valve, but may also be connected to the third port through a switching valve 280 to be selectively in communication with the multi-port valve.

The switching valve 280 may comprise at least three ports. The needle washing liquid and/or air can be selectively drawn into the flush pump 250 by means of the switching valve 280.

The multi-port valve further comprises a second port, the second port can be selectively in communication with the third port, and the needle washing liquid or the air flows into the multi-port valve through the second port, and can flow into the flush pump 250 through the third port.

The switching valve 280 is in communication with the second port of the multi-port valve, and the switching valve 280 can selectively access the needle washing liquid or the air.

It can be understood that since the flush pump 250 is used to flush the collection needle (e.g., its inner and outer walls), there is no need to add additional needle washing pump members, and the inner and outer walls of the needle can be flushed by only moving the needle to a needle washing position (e.g., the position where the third port 3 of the fraction valve 210 is in communication with the fourth port 4, shown in the embodiment of Fig. 4), and using the flush pump 250 to inject the needle washing liquid or gas (preferably, air) into a needle washing tank. Since the inside of the fraction collection needle 240 is flushed with the gas (preferably air) or needle washing liquid, residues can be reduced, the recovery rate can be improved, and the design is also very simple.

In addition, it can be seen that in the present invention, the operation of the fraction collector is very flexible, and users can select corresponding functions or modes according to different application requirements (including collecting fractions, discharging waste liquid, recovering residual fractions inside the fraction collection needle 240, cleaning the fraction collection needle 240, accurately measuring the flow rate of the liquid flow in the pipeline, etc.).

Although various embodiments of the present invention have been described in the accompanying drawings with reference to the examples of determining the flow rate of the liquid flow in the liquid chromatography system, it should be understood that the embodiments within the scope of protection of the present invention can be applied to other applications with similar structures and/or functions that require calibration of the volume of pipelines, such as pipeline volume calibration used in other fields of biology, chemistry, testing, and the like.

The foregoing description has given the numerous features and advantages, comprising various alternative embodiments, and details of the structures and functions of the devices and methods. This document is intended to be exemplary, not exhaustive or limiting.

It will be apparent to a person skilled in the art that various modifications may be made, particularly in aspects of structures, materials, elements, parts, shapes, dimensions and arrangements of members, to the full scope indicated by the broad generic meanings of the terms as expressed in the appended claims, including incorporation of these aspects within the scope of the principles described herein. To the extent that the various modifications do not depart from the spirit and scope of the appended claims, they are intended to be included herein.

**Claims**

1.   A method for determining the flow rate of a liquid flow in a liquid chromatography system, the liquid chromatography system sequentially comprising a fraction valve (210), a first sensor (220) and a second sensor (230) along a flow path direction, and the fraction valve (210) comprising a liquid inlet, a liquid discharge port and a gas inlet, wherein a pipeline between the first sensor (220) and the second sensor (230) has a known inter-sensor pipeline volume, **characterized in that** the method comprises:

   step A: emptying a pipeline between the liquid discharge port of the fraction valve (210) and the first sensor (220);
   step B: guiding a liquid flow from the liquid discharge port of the fraction valve (210) to pipelines at positions where the first sensor (220) and the second sensor (230) are located; and
   step C: determining the flow rate of the liquid flow on the basis of a time difference between a first moment when the first sensor (220) detects a liquid-gas interface where the liquid flow interfaces with a gas and a second moment when the second sensor (230) detects the liquid-gas interface, and the inter-sensor pipeline volume.

2.   The method as claimed in claim 1, **characterized in that** in step A, the fraction valve (210) is at its first position where the gas inlet of the fraction valve (210) is in fluid communication with the liquid discharge port, and step A comprises introducing the gas from the gas inlet of the fraction valve (210) into the fraction valve (210) and guiding it to the pipelines at the positions where the first sensor (220) and the second sensor (230) are located through the liquid discharge port of the fraction valve (210).

3.   The method as claimed in claim 2, **characterized in that** in step B, the fraction valve (210) is switched from the first position to a second position where the liquid inlet of the fraction valve (210) is in fluid communication with the liquid discharge port, and step B comprises allowing the liquid flow to flow from the liquid inlet into the fraction valve (210) and flow out through the liquid discharge port.

4.   The method as claimed in any one of claims 1 to 3, **characterized in that** the liquid chromatography system further comprises a liquid chromatograph (100) arranged before the fraction valve (210) along the flow path direction, wherein step B comprises guiding the liquid flow from the liquid chromatograph (100) to flow into the fraction valve (210) through the liquid inlet.

5.   The method as claimed in claim 2 or 3, **characterized in that** step A comprises pumping the gas to the fraction valve (210) by means of a second pump (290) connected to the gas inlet of the fraction valve (210).

6.   The method as claimed in any one of claims 1 to 3, **characterized in that** the gas is air.

7.   The method as claimed in any one of claims 1 to 3, **characterized in that** the method further comprises a voltage threshold determination step before step A:

   recording a voltage value generated by the first sensor (220) when it detects the liquid flow as a high voltage of the first sensor (220), recording a voltage value generated by the first sensor (220) when it detects the gas as a low voltage of the first sensor (220), and determining a voltage threshold of the first sensor (220) on the basis of the high voltage and the low voltage of the first sensor (220), wherein in step C, a moment when the voltage value of the first sensor (220) upon its detection of the liquid flow exceeds its voltage threshold is recorded as the first moment; and/or
   recording a voltage value generated by the second sensor (230) when it detects the liquid flow as a high voltage of the second sensor (230), recording a voltage value generated by the second sensor (230) when it detects the gas as a low voltage of the second sensor (230), and determining a voltage threshold of the second sensor (230) on the basis of the high voltage and the low voltage of the second sensor (230), wherein in step C, a moment when the voltage value of the second sensor (230) upon its detection of the liquid flow exceeds its voltage threshold is recorded as the second moment.

8.   The method as claimed in claim 7, **characterized in that** the voltage threshold of the first sensor (220) and/or the voltage threshold of the second sensor (230) are calculated by the following formula:

$$V_{threshold} = (V_{high\ voltage} - V_{low\ voltage}) * 60\% + V_{low\ voltage}.$$

9. A fraction collector, comprising:

a fraction valve (210) comprising a liquid inlet, a liquid discharge port and a gas inlet;
a first sensor (220) arranged behind the liquid discharge port of the fraction valve (210) along a flow path direction;
a second sensor (230) arranged behind the first sensor (220) along the flow path direction, wherein a pipeline between the first sensor (220) and the second sensor (230) has a known inter-sensor pipeline volume; and
a controller configured to control the position of the fraction valve (210), wherein when the fraction valve (210) is at a first position, the gas inlet is in fluid communication with the liquid discharge port, so that a gas can be introduced into the fraction valve (210) from the inlet port of the fraction valve (210) and guided through the liquid discharge port of the fraction valve (210) to pipelines at positions where the first sensor (220) and the second sensor (230) are located; when the fraction valve (210) is at a second position, the liquid inlet is in fluid communication with the liquid discharge port, so that a liquid flow can flow from the liquid inlet into the fraction valve (210) and flow through the liquid discharge port to the pipelines at the positions where the first sensor (220) and the second sensor (230) are located; and the controller can determine the flow rate of the liquid flow on the basis of a time difference between a first moment when the first sensor (220) detects a liquid-gas interface where the liquid flow interfaces with the gas and a second moment when the second sensor (230) detects the liquid-gas interface, and the inter-sensor pipeline volume.

10. The fraction collector as claimed in claim 9, **characterized in that** the fraction collector further comprises a second pump (290) arranged to be connected to the gas inlet of the fraction valve (210) so that a gas can be pumped into the fraction valve (210).

11. A liquid chromatography system, comprising:

a fraction collector as claimed in any one of claims 9 to 10; and
a liquid chromatograph (100) arranged before the fraction valve (210) along a flow path direction.

Fig. 1

Fig. 2

Step A

Step B/C

Fig. 3

Fig. 4

Fig.5

## INTERNATIONAL SEARCH REPORT

| International application No. |
| --- |
| **PCT/CN2021/083669** |

| A. | CLASSIFICATION OF SUBJECT MATTER |
| --- | --- |

G01N 30/02(2006.01)i; G01N 30/80(2006.01)i; G01F 1/708(2006.01)i; G01F 1/64(2006.01)i

According to International Patent Classification (IPC) or to both national classification and IPC

| B. | FIELDS SEARCHED |
| --- | --- |

Minimum documentation searched (classification system followed by classification symbols)

G01N30; G01F1

Documentation searched other than minimum documentation to the extent that such documents are included in the fields searched

Electronic data base consulted during the international search (name of data base and, where practicable, search terms used)

CNKI, CNTXT, CNABS, VEN: 色谱, 流量, 流速, 气泡, 空气, 气体, 电压, gas, bubble+, air, flow, rate, chromatography

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 111505173 A (THERMO FISHER (SHANGHAI) INSTRUMENT CO., LTD.; THERMO FISHER (SUZHOU) INSTRUMENTS CO., LTD.) 07 August 2020 (2020-08-07)<br>claims 1-11 | 1-11 |
| X | US 2016131617 A1 (WATERS TECHNOLOGIES CORP.) 12 May 2016 (2016-05-12)<br>claims 1-21, description paragraphs 26-56, figures 1-5 | 1-11 |
| X | US 2016069720 A1 (NJAMFA SERGE) 10 March 2016 (2016-03-10)<br>claim 7, description paragraphs 40, 48-54, figures 3, 6A, 6B | 1, 4, 6-8 |
| X | JP 2014102164 A (TOSOH CORP.) 05 June 2014 (2014-06-05)<br>description, paragraphs 17-41, figures 1-11 | 1, 4, 6-8 |
| X | JP H02150768 A (FUJI CHEM K. K.) 11 June 1990 (1990-06-11)<br>description, pages 447-449, and figure 1 | 1, 4, 6-8 |
| A | CN 109765334 A (XI'AN JIAOTONG UNIVERSITY) 17 May 2019 (2019-05-17)<br>entire document | 1-11 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **12 June 2021** | **07 July 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/083669**

| Patent document cited in search report | | | Publication date (day/month/year) | Patent family member(s) | | | Publication date (day/month/year) |
|---|---|---|---|---|---|---|---|
| CN | 111505173 | A | 07 August 2020 | CN | 111505173 | B | 08 December 2020 |
| US | 2016131617 | A1 | 12 May 2016 | DE | 102015118766 | A1 | 12 May 2016 |
| | | | | US | 10175209 | B2 | 08 January 2019 |
| | | | | GB | 201519473 | D0 | 16 December 2015 |
| | | | | GB | 2536749 | B | 12 June 2019 |
| | | | | GB | 2536749 | A | 28 September 2016 |
| US | 2016069720 | A1 | 10 March 2016 | US | 9297682 | B1 | 29 March 2016 |
| JP | 2014102164 | A | 05 June 2014 | JP | 6040726 | B2 | 07 December 2016 |
| JP | H02150768 | A | 11 June 1990 | | None | | |
| CN | 109765334 | A | 17 May 2019 | CN | 109765334 | B | 28 August 2020 |

Form PCT/ISA/210 (patent family annex) (January 2015)